# EUROPÄISCHE PATENTSCHRIFT

(11) **EP 1 855 946 B1**
(45) Veröffentlichungstag und Bekanntmachung des Hinweises auf die Patenterteilung: **21.10.2009**
(21) Anmeldenummer: 06707349.4
(22) Anmeldetag: 01.03.2006
(51) Int. Cl.: B65B 47/02, B65B 9/04, B29C 51/42

(54) **VERPACKUNGSMASCHINE ZUR HERSTELLUNG VON SCHRUMPFFÄHIGEN VERPACKUNGEN**
PACKAGING MACHINE FOR PRODUCING SHRINKABLE PACKAGES
MACHINE D'EMBALLAGE SERVANT A PRODUIRE DES EMBALLAGES RETRECISSABLES

(30) Priorität: 01.03.2005 DE 102005009870; 01.03.2005 DE 102005009868; 18.04.2005 DE 102005017937
(43) Veröffentlichungstag der Anmeldung: 21.11.2007
(73) Patentinhaber: CFS Germany GmbH, 35216 Biedenkopf-Wallau (DE)
(72) Erfinder: FEISEL, Jörg, 35216 Biedenkopf (DE); MEYER, Klaus, 35236 Breidenbach (DE)
(74) Vertreter: Wolff, Felix
(86) Internationale Anmeldenummer: PCT/EP2006/001869
(87) Internationale Veröffentlichungsnummer: WO 2006/092289

(56) Entgegenhaltungen:
- EP-A- 0 186 729
- WO-A-20/04000650
- DE-A1- 2 843 166
- DE-B- 1 145 087
- US-A- 3 661 484
- US-A- 3 958 394
- US-A- 4 932 856

## Beschreibung

Die vorliegende Vorrichtung betrifft eine Verpackungsmaschine aufweisend eine Vorrichtung zur Herstellung einer tiefgezogenen Kunststoffverpackungsmulde und einer Siegelvorrichtung zum Siegeln einer Oberfolie auf die Verpackungsmulde, wobei mindestens die Verpackungsmulde aus einer schrumpffähigen Kunststofffolie gefertigt ist, sowie ein Verfahren zum Herstellen von Verpackungen mit mindestens einer Schrumpffolie.

Lebensmittel werden heutzutage immer öfter in Kunststoffverpackungen angeboten, die aus einer Verpackungsmulde, in die die Lebensmittel eingelegt werden und einer Oberfolie, mit der die Verpackungsmulde verschlossen wird, bestehen. Derartige Verpackungen werden mit Vorrichtungen und Verfahren hergestellt, wie sie beispielsweise aus der den Oberbegriffen der Ansprüche 1 und 20 entsprechendenWO 2004/000650 bekannt sind. Die Verpackungsmulden werden in der Regel durch Tiefziehen aus einer planen Folienbahn hergestellt. Bei einigen Verpackungen ist entweder die Folienbahn, in die die Verpackungsmulde eingeformt wurde, und/oder die Oberfolie eine sogenannte Schrumpffolie, d. h. eine Folie, die unter Temperatureinwirkung schrumpft. Diese Verpackungen haben den Vorteil, dass die verpackten Lebensmittel von der Verpackung sehr eng umschlossen werden. Bei diesen Verpackungen wird erst die Oberfolie mit der Folienbahn, aus der die Verpackungsmulde tiefgezogen worden ist, verbunden, bevor die Schrumpfung erfolgt. In der Vergangenheit sind die Verpackungsmulden oftmals unkontrolliert rückgeschrumpft und/oder die Schrumpfung wurde schon durch das Siegelwerkzeug aktiviert, so dass die Schrumpfung dadurch meist unkontrolliert war.

Es war deshalb die Aufgabe der vorliegenden Erfindung, eine Verpackungsmaschine zur Verfügung zu stellen, mit der die Probleme des vorliegenden Standes der Technik behoben werden können.

Gelöst wird die Aufgabe mit einer Verpackungsmaschine gemäß Anspruch 1

Es war für den Fachmann überaus erstaunlich und nicht zu erwarten, dass sich mit einer derartigen Verpackungsmaschine Verpackungsmulden mit geraden Verpackungsrändem aus einer schrumpffähigen Kunststofffolie herstellen lassen und/oder dass die ungewollte Rückschrumpfung der hergestellten Verpackungsmulde unmittelbar nach dem Tiefziehen zumindest vermindert ist. Dadurch lassen sich Verpackungsbehälter mit einer ganz neuen Erscheinungsform und einer sehr reproduzierbaren Größe herstellen. Des weiteren war es überaus erstaunlich und nicht zu erwarten, dass es mit der Siegelvorrichtung der erfindungsgemäßen Verpackungsmaschine gelingt, eine unkontrollierte Schrumpfung der Verpackungsmude oder der Oberfolie beim Siegeln zu vermeiden. Die erfindungsgemäße Verpackungsmaschine ist einfach und kostengünstig herzustellen und zu betreiben.

Eine schrumpffähige Folie im Sinne der Erfindung ist eine thermoformbare, vorzugsweise tiefziehfähige Mehrschichtfolie mit einer Wärmeschrumpffähigkeit in Längs- und in Querrichtung von jeweils wenigstens 20%, wobei die Wärmeschrumpffähigkeit durch Thermoformung im wesentlichen nicht beeinflusst wird. Bevorzugt beträgt die Wärmeschrumpffähigkeit der erfindungsgemäßen Mehrschichtfolien in Längs- und in Querrichtung jeweils wenigstens 25%, bevorzugter wenigstens 30%, noch bevorzugter wenigstens 35%, am bevorzugtesten wenigstens 40% und insbesondere wenigstens 45%. Derartige Folien werden beispielsweise in der DE 10 2005 017 937.1 offenbart.

Erfindungsgemäß weist die Verpackungsmaschine ein Tiefziehwerkzeug auf, das beim Tiefziehen gekühlt ist. Vorzugsweise weist das Tiefziehwerkzeug dafür Kühlmittel auf. Derartige Kühlmittel können beispielsweise Kühlleitungen sein, die im Bereich des Tiefziehwerkzeugs angeordnet sind und durch die ein Kühlmedium, beispielsweise eine Kühlflüssigkeit oder ein Kühlgas, zirkuliert.

Vorzugsweise weist die Tiefziehvorrichtung Haltemittel auf, so dass die Folie zwischen dem Haltemittel und dem Tiefziehwerkzeug einspannbar ist. Vorzugsweise handelt es sich bei dem Haltemittel um einen Klemmrahmen. Vorzugsweise ist das Haltemittel vertikal verschiebbar angeordnet. Vorzugsweise wird die Folienbahn mit - dem Haltemittel fixiert bevor das Tiefziehen erfolgt. In einer bevorzugten Ausführungsform der vorliegenden Erfindung ist dieses Haltemittel ebenfalls mit einem Kühlmittel versehen, das an denselben Kühlmittelkreislauf wie das Tiefziehwerkzeug oder an einen anderen Kühlkreislauf angeschlossen sein kann. Als Kühlmittel eignet sich insbesondere Wasser oder ein Kühlmittel, das beispielsweise auch in Kühlschränken und dergleichen Anwendung findet. Diese bevorzugte Ausführungsform der vorliegenden Erfindung hat den Vorteil, dass der Bereich der Verpackungsmulde, an den in einem weiteren Verfahrensschritt eine Deckelfolie gesiegelt wird, keine oder nur sehr geringe Spannungen aufweist, was in weniger Leckagen im Bereich der Siegelnaht resultiert.

Vorzugsweise ist mindestens ein Kühlmittelkreislauf geregelt, beispielsweise temperaturgeregelt, so dass das Tiefziehwerkzeug und/oder das Haltemittel immer eine nahezu konstante Temperatur aufweist.

Weiterhin bevorzugt weist die Tiefziehvorrichtung ein Heizmittel, besonders bevorzugt eine Heizplatte auf, mit der die Folienbahn insbesondere vor dem Tiefziehen aufheizbar ist. Mit dem Heizmittel wird die Folienbahn zumindest bereichsweise bis zur Plastifizierungstemperatur erwärmt. Vorzugsweise erfolgt die Erwärmung sehr schnell. Besonders bevorzugt weist die Tiefziehvorrichtung Mittel auf, mit denen der Kontakt und damit der Wärmeübergang zwischen der Folienbahn und dem Heizmittel verbessert wird. Besonders bevorzugt wird dieser Kontakt durch unter- und/oder Überdruck verbessert, der die Foliebahn an die Heizmittel saugt und/oder drückt. Für den Fall, dass mehrere Verpackungsmulden gleichzeitig hergestellt werden, weist die erfindungsgemäße Vorrichtung vorzugsweise pro herzustellende Verpackungsmulde ein Heizmittel auf. Vorzugsweise sind die Heizmittel vertikal verschiebbar, an und abschaltbar und/oder Temperatur-regelbar. Nachdem die Foliebahn erwärmt worden ist und besonders bevorzugt vor dem Tiefziehen wird das Heizmittel wieder von der Folienbahn entfernt und/oder abgeschaltet, um eine Überhitzung der Folienbahn zu vermeiden und um zu verhindern, dass bei der Kühlung des Tiefziehwerkzeuges beziehungsweise des Haltemittels zu viel Wärme abgeführt werden muss. Das Heizmittel kann jedoch auch als Tiefziehstempel eingesetzt werden. Vorzugsweise erfolgt die Erwärmung lokal sehr gezielt und sehr schnell, so dass nur die gewünschten Bereiche erwärmt werden. Nach oder beim Tiefziehen wird die Folienbahn dann möglichst schnell abgekühlt, um eine ungewollte Rückverformung der thermogeformten Verpackungsmulden zu vermeiden. Der Fachmann erkennt, dass die Erwärmung und Kühlung auch gleichzeitig erfolgen kann, um zu vermeiden, dass sich gewisse Bereiche der Folienbahn während deren Erwärmung miterwärmen und/oder um eine unerwünschte Aufwärmung dieser Bereiche zu vermindern und/oder um eine ungewollte Rückverformung zu vermeiden.

In einer weiteren bevorzugten Ausführungsform der vorliegenden Erfindung weist die erfindungsgemäße Verpackungsmaschine Vakuum- und/oder Druckmittel auf, mit dem die Folienbahn in das Tiefziehwerkzeug hineingedrückt bzw. hineingezogen wird und dabei seine abschließende Form erhält bzw. um den Wärmeübergang zwischen der Folienbahn und dem Tiefziehwerkzeug zu verbessern. Dieselben oder andere Vakuum- und/oder Druckmittel können auch dafür herangezogen werden, um den Kontakt zwischen der unverformten Folienbahn und dem Heizmittel zu verbessern.

Weiterhin weist die Verpackungsmaschine eine Siegelvorrichtung auf. Die Siegelvorrichtung dient zum Siegeln einer Oberfolie auf eine Verpackungsmulde, wobei die Verpackungsmulde und/oder die Deckelfolie aus einer schrumpffähigen Folie gefertigt sind.

In der Regel wird die Verpackungsmulde durch Tiefziehen in eine Folienbahn eingeformt. Der Fachmann versteht, dass auch die Oberfolie, die auf die Verpackungsmulde gesiegelt wird, tiefgezogen sein kann.

Mit der erfindungsgemäßen Verpackungsmaschine können Verpackungen aus einer schrumpffähigen Verpackungsmulde und einer schrumpffähigen Oberfolie hergestellt werden. Solche Verpackungen werden als Skrinkpack bezeichnet. Die Oberfolie kann jedoch auch aus einer nicht schrumpffähige Folienbahn, beispielsweise aus einer geschäumten Polyolefin oder geschäumten Polyester sein. Solche Verpackungen werden als Shrinkplate bezeichnet.

Die Siegelvorrichtung der erfindungsgemäßen Verpackungsmaschine weist ein Unterwerkzeug und ein Oberwerkzeug auf, wobei sich das Unterwerkzeug unterhalb und sich das Oberwerkzeug oberhalb der Folienbahnen, die miteinander verbunden werden, befindet. Das Unterwerkzeug und das Oberwerkzeug werden zum Siegeln der Oberfolie an die Unterfolie gegeneinander gepresst. Dabei erfolgt die Siegelung der beiden Folienbahnen aneinander unter Temperatureinfluß. Erfindungsgemäß ist das Unterwerkzeug und/oder das Oberwerkzeug gekühlt. Diese Kühlung kann beispielsweise durch Zirkulation eines Kühlmediums durch Kanäle, die in das Unter- und/oder das Oberwerkzeug eingearbeitet sind, erfolgen. Als Kühlmedium eignet sich Wasser oder die von Kühlschränken bekannten Medien. Vorzugsweise erfolgt die Kühlung der Oberfolie und/oder der Verpackungsmulden so, dass kein unkontrollierter Schrumpf der jeweiligen Folie einsetzt, d.h. die Temperatur der jeweiligen Folienbahn darf die Temperatur, bei der der Schrumpf einsetzt nie erreichen oder überschreiten.

Vorzugsweise ist zumindest das Unterwerkzeug, besonders bevorzugt auch das Oberwerkzeug vertikal verschiebbar.

Weiterhin bevorzugt weist das Ober oder das Unterwerkzeug ein Siegelmittel, beispielsweise einen Siegelrahmen, auf, das(der) beheizt ist. Die Beheizung erfolgt in der Regel durch eine elektrische Beheizung. Die Beheizung sollte bei der vorliegenden Erfindung vorteilhafterweise auf das Siegelmittel beschränkt sein, damit eine unnötige Kühlung des jeweiligen Werkzeugs nicht vonnöten ist.

An dem Werkzeug, das den Siegelrahmen nicht aufweist, ist vorzugsweise eine Siegelbrille angeordnet. Vorzugsweise weist die Siegelbrille eine Gummigegenlage auf. Weiterhin bevorzugt ist die Siegelbrille gekühlt und besonders bevorzugt ebenfalls vertikal verschiebbar.

Das Oberwerkzeug ist vorzugsweise vertikal verschieblich angeordnet. Weiterhin bevorzugt ist das Oberwerkzeug gekühlt, um zu vermeiden, dass es sich mit der Zeit aufheizt und dadurch eine ungewollte Schrumpfung der Oberfolie bewirkt. Diese Ausführungsform ist insbesondere dann von Vorteil, wenn die Oberfolie eine Schrumpffolie ist.

Vorzugsweise weist die Siegelvorrichtung eine Kühlplatte auf, die besonders bevorzugt im Bereich der Oberfolie angeordnet ist. Diese Kühlplatte ist vorzugsweise ebenfalls vertikal verschiebbar angeordnet. Für den Fall, dass die Oberfolie an mehrere Verpackungsmulden gleichzeitig gesiegelt wird, ist vorzugsweise im Bereich jeder Verpackungsmulde jeweils eine Kühlplatte angeordnet.

Als Verpackungsmaschine kommt jede dem Fachmann geläufige Verpackungsmaschine in Frage. Vorzugsweise handelt es sich um eine sogenannte Form-Fill-Seal-Verpackungsmaschine.

Ein weiterer Gegenstand der vorliegenden Erfindung ist ein Verfahren gemäß Anspruch 20

Die folgenden Ausführungen gelten für beide erfindungsgemäße Verfahren.

Es war für den Fachmann überaus erstaunlich und nicht zu erwarten, dass sich mit einem derartigen Verfahren Verpackungsmulden mit geraden Rändern herstellern lassen und/oder dass keine ungewollte Schrumpfung nach dem Tiefziehen erfolgt. Dadurch lassen sich Verpackungsbehälter mit einer ganz neuen Erscheinungsform und einer sehr reproduzierbaren Größe herstellen. Mit den erfindungsgemäßen Verfahren wird verhindert, dass eine ungewolltes, von dem Siegelwerkzeug initiiertes Schrumpfen der Schrumpffolie erfolgt.

Vorzugsweise wird die Folienbahn vor dem Tiefziehen eingespannt. Vorzugsweise erfolgt das Einspannen der Folienbahn mit einem Klemmrahmen. Besonders bevorzugt ist dieser Klemmrahmen gekühlt und am meisten bevorzugt vertikal verschiebbar angeordnet. Ein gekühlter Klemmrahmen hat den Vorteil, dass der spätere Siegelbereich zumindest nahezu spannungsfrei ist, was zu weniger Leckagen im Siegelbreich führt.

Weiterhin bevorzugt wird die Folienbahn vor dem Tiefziehen aufgewärmt. Vorzugsweise erfolgt das Aufwärmen und Kühlen zeitlich versetzt, wobei das Aufwärmen vorzugsweise vor dem Kühlen erfolgt. Weiterhin bevorzugt wird eine Oberfläche der Folienbahn aufgewärmt und die gegenüberliegende Oberfläche gekühlt. In einer weiteren bevorzugten Ausführungsform der vorliegenden Erfindung erfolgt das Erwärmen und Kühlen gleichzeitig, wobei die Folienbahn bereichsweise aufgewärmt und abgekühlt wird. Besonders bevorzugt wird die Folienbahn in Richtung der Aufheiz- bzw. Abkühlmittel gedrückt oder gesaugt, um einen möglichst guten Wärmeübergang zu erzielen. Für den Fall, dass mehrere Verpackungsmulden gleichzeitig hergestellt werden, wird jeder herzustellenden Verpackungsmulde vorzugsweise ein Heizmittel zugeordnet. Dadurch kann die benötigte Wärme lokal sehr gezielt in die Folienbahn eingebracht werden.

Das Tiefziehen kann auf jede dem Fachmann geläufige Art und Weise erfolgen. Vorzugsweise erfolgt das Tiefziehen jedoch durch Über- und/oder Unterdruck (Vakuum). Weiterhin bevorzugt erfolgt das Tiefziehen mit einem Stempel oder das Tiefziehen wird mit einem Stempel unterstützt, wobei der Stempel und das Heizmittel ein Bauteil sein können.

Erfindungsgemäß wird die Folienbahn zumindest bereichsweise vorm, beim und/oder nach dem Tiefziehen gekühlt. Insbesondere der Bereich der tiefgezogen worden ist, wird beim und/oder nach dem Tiefziehen so lange gekühlt, bis keine ungewollte Rückverformung des tiefgezogenen Bereichs mehr erfolgt. In der Regel ist dies bei Temperaturen unterhalb der Plastifizierungstemperatur der jeweiligen Folie gegeben.

Vorzugsweise wird das der Schrumpffolie zugewandte Siegelwerkzeug gekühlt. Diese Ausführungsform des erfindungsgemäßen Verfahrens hat den Vorteil, dass das der Schrumpffolie zugewandte Werkzeug ein Schrumpfen der Schrumpffolie nicht ungewollt aktiviert. Beim Einsatz von zwei schrumpffähigen Folien werden vorzugsweise beide Werkzeuge gekühlt

Vorzugsweise wird zumindest die schrumpffähige Folienbahn vorm und/oder beim Siegeln fixiert. Vorzugsweise erfolgt das Fixieren mit den Siegelwerkzeugen. Weiterhin bevorzugt erfolgt das Fixieren der schrumpffähigen Folienbahn mit den Ketten, mit denen die Folienbahn entlang der Verpackungsmaschine transportiert wird.

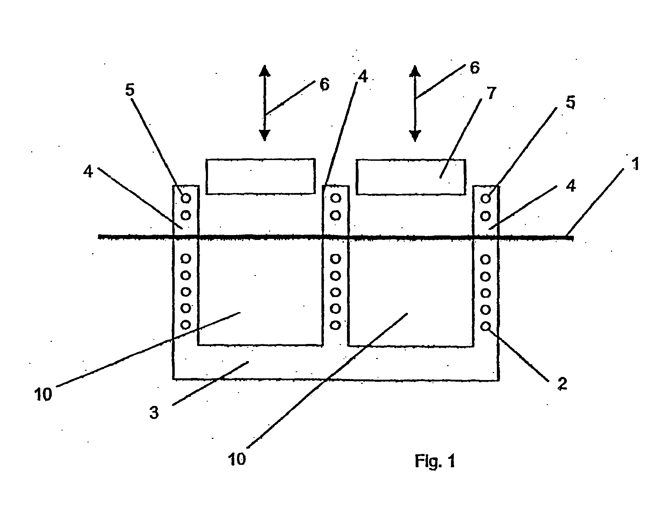

Im Folgenden wird die Erfindung anhand der Figuren 1 bis 9 erläutert. Dieses Erläuterungen sind lediglich beispielhaft und schränken den allgemeinen Erfindungsgedanken nicht ein. Die Erläuterungen gelten für die erfindungsgemäße Vorrichtung, die erfindungsgemäße Verpackung.sowie das erfindungsgemäße Verfahren gleichermaßen.
**Figur 1** zeigt die Tiefziehvorrichtung vor dem Tiefziehen.
**Figur 2** zeigt das Erwärmen der Folienbahn.
**Figur 3** zeigt das Tiefziehen der Verpackungsmulde.
**Figur 4** zeigt das Lösen der Halterung.
**Figur 5** zeigt die resultierende Verpackungsmulde.
**Figur 6** zeigt die Tiefziehvorrichtung
**Figur 7** zeigt die Siegelvorrichtung
**Figur 8** zeigt eine Verpackungsmaschine zur Herstellung eines shrinkplate
**Figur 9** zeigt eine Verpackungsmaschine zur Herstellung eines shrinkpacks

In **Figur 1** ist die Tiefziehvorrichtung dargestellt, die ein Tiefziehwerkzeug 3 mit mehreren Tiefziehkammern 10 aufweist. Erfindungsgemäß ist dieses Tiefziehwerkzeug gekühlt, wobei die Kühlung in dem vorliegenden Fall durch Bohrung 2 erfolgt, durch die ein Kühlmedium geführt wird. Oberhalb des Tiefziehwerkzeuges 3 befindet sich die zu verformende Folienbahn 1, die zwischen dem Tiefziehwerkzeug 3 und einem Klemmrahmen 4 eingespannt ist. Der Klemmrahmen 4 ist in dem vorliegenden Fall mittels der Bohrung 5, durch die ein Kühlmittel geführt wird, ebenfalls kühlbar. Oberhalb der Folienbahn 1 befinden sich Heizplatten 7, die wie durch die Doppelpfeile 6 dargestellt, anhebbar bzw. absenkbar sind. Der Fachmann weiß, dass das Tiefziehwerkzeug 3 ebenfalls vertikal bewegbar ist.

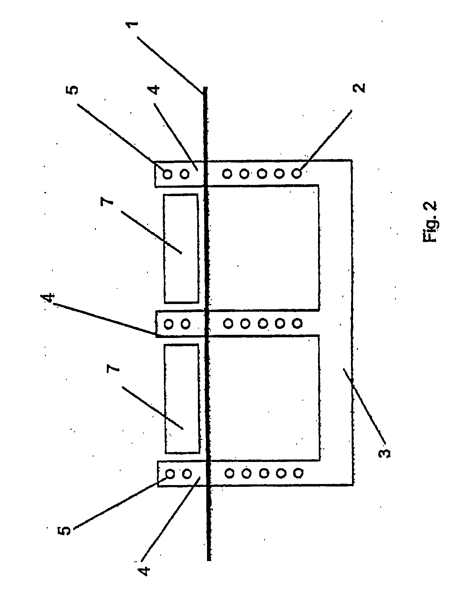

**Figur 2** zeigt das Erwärmen der zwischen dem Klemmrahmen 4 und dem Tiefziehwerkzeug 3 eingespannten Folienbahn 1. Dafür wurden die Heizplatten 7 abgesenkt, so dass sie vorzugsweise in Kontakt mit der Folienbahn stehen. Die Folienbahn wird solange aufgewärmt, bis sie im Bereich der Wärmeplatte die gewünschte Temperatur aufweist. Vorzugsweise erfolgt die Erwärmung zeitgesteuert.

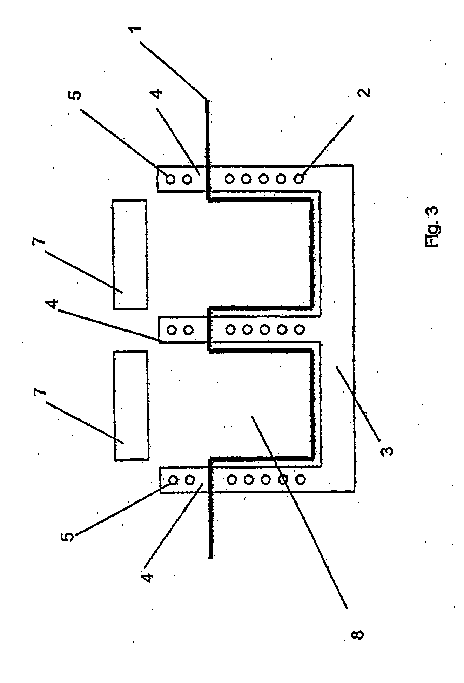

Sobald die Folie hinreichend erwärmt wurde, werden die Heizplatten wieder angehoben und das Tiefziehen der Folienbahn 1 zur Herstellung der Verpackungsmulden 8 erfolgt **(****Fig. 3****).** In dem vorliegenden Fall sind die Tiefziehkammern 10 mit Vakuum beaufschlagbar, mit dem die Folienbahn wie dargestellt verformt wird. Während des gesamten Aufheiz- und Tiefziehprozesses werden das Tiefziehwerkzeug und der Klemmrahmen gekühlt.

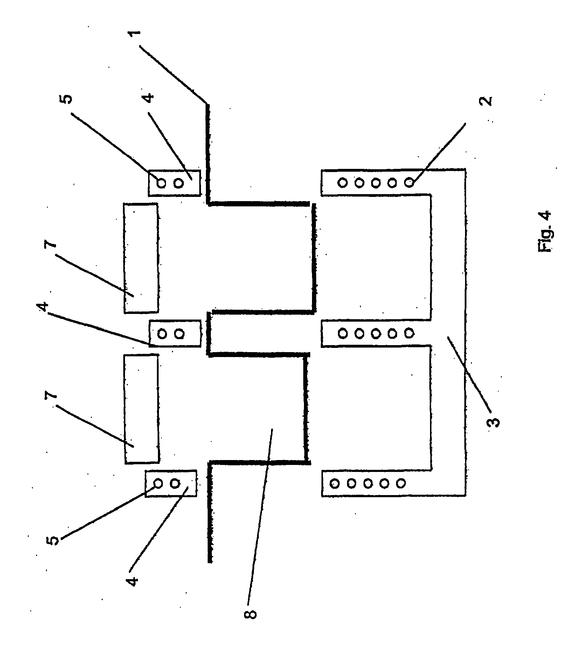

Sobald die Verpackungsmulden 8 tiefgezogen sind **(****Figur 4****),** wird das Tiefziehwerkzeug 3 abgesenkt, so dass sich die Verpackungsmulden 8 aus dem Tiefziehwerkzeug 3 entformen. Das Tiefziehwerkzeug wird soweit abgesenkt, dass die hergestellten Verpackungsmulden aus dem Tiefziehbereich heraustransportiert werden können und eine neuerliche Verformung der Folienbahn 1 erfolgen kann.

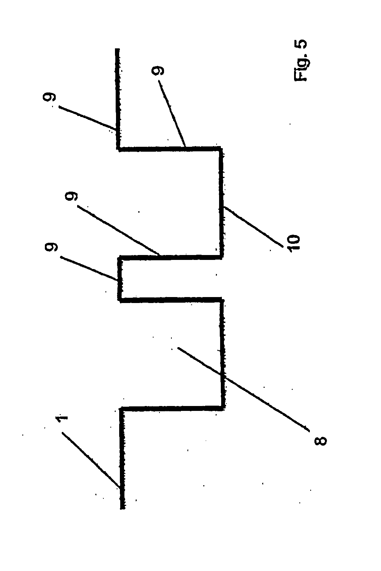

In **Figur 5** sind die fertiggestellten Verpackungsmulden dargestellt. Durch die Kühlung der Tiefziehform sind die Packungsränder 9 und/oder der Boden der Verpackung gerade, weil die Folienbahn nach dem Tiefziehen gar nicht oder nur sehr wenig nach oder beim Tiefziehen schrumpft.

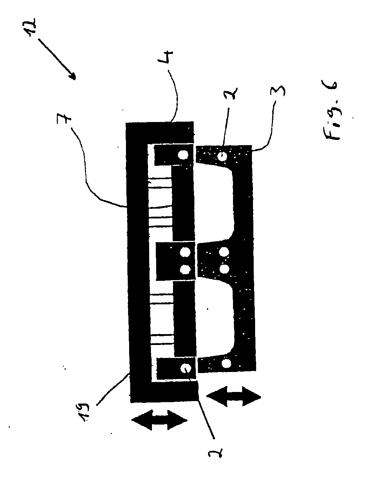

**Figur 6** zeigt die Tiefziehvorrichtung zur Herstellung von tiefgezogenen Kunstoffverpackungsmulden aus schrumpffähigen Folien aus einer schrumpffähigen Folienbahn. Die Vorrichtung 12 weist ein Unterwerkzeug 3 und ein Oberwerkzeug 19 auf. Das Unterwerkzeug 3 weist das Negativ der Form der herzustellenden Verpackungsmulde auf. In das Unterwerkzeug sind Kanäle 2 eingearbeitet, durch die ein Kühlmittel zirkuliert mit dem das Unterwerkzeug gekühlt wird. Wie durch den Doppelpfeil angedeutet, ist das Unterwerkzeug absenkbar bzw. anhebbar. Zwischen dem Unterwerkzeug und dem Oberwerkzeug verläuft die nicht dargestellte Folienbahn. Das Oberwerkzeug 19 ist ebenfalls anhebbar bzw. absenkbar. Dasselbe gilt für den Klemmrahmen 4 und die Heizmittel 7. Mit dem Klemmrahmen wird die Folienbahn gegen das Unterwerkzeug gedrückt und festgeklemmt, damit sie tiefgezogen werden kann. Der Klemmrahmen 4 weist darüber hinaus auch Kanäle 2 auf, durch die ein Kühlmittel zirkuliert, so dass der Rahmen der Klemmrahmen 4 kühlbar ist. Die Kühlung des Klemmrahmens hat insbesondere den Vorteil, dass sich die Folienbahn, die sich unter dem Klemmrahmen befindet nicht erwärmt wird und somit spannungsfrei ist. An diesen Bereich wird später die Oberfolie gesiegelt. Dadurch dass dieser Bereich spannungsfrei ist, weist die Siegelung der später resultierenden Verpackung eine sehr hohe Dichtigkeit auf. Die erfindungsgemäße Vorrichtung weist pro herzustellender Verpackungsmulde ein Heizelement 7 auf. Mit diesen Heizelementen wird die Folienbahn möglichst schnell erwärmt. Um den Wärmeübergang zwischen der Folienbahn und der jeweiligen Heizmitteln zu verbessert, kann in dem Bereich unter der Folienbahn ein Überdruck erzeugt werden, der die Folienbahn gegen das Heizmittel drückt und damit den Wärmeübergang verbessert. Der Fachmann erkennt, dass auch zwischen der Folienbahn und dem Heizmittel 7 ein Unterdruck erzeugt werden kann, der die Folienbahn gegen das Heizmittel saugt. Sobald die Folienbahn ihre Plastifizierungstemperatur erreicht hat, wird sie mit den Heizmitteln 7, die dann gleichzeitig als Stempel wirken in die jeweilige Tiefziehform gedrückt und/oder es wird in der Tiefziehform ein Unterdruck angelegt, der die Folienbahn in die Tiefziehform hineinsaugt. Diese Tiefziehform ist gekühlt, so dass die Folienbahn beim und/oder unmittelbar nach dem Tiefziehen gekühlt wird. Diese Kühlung erfolgt so lange bis die Folienbahn eine Temperatur erreicht hat, bei der eine ungewollte Rückverformung der Verpackungsmulde aufgrund der Schrumpffähigkeit der Folie ausgeschlossen werden kann.

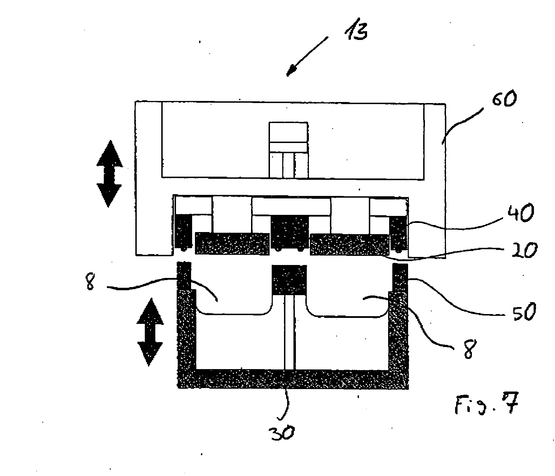

**Figur 7** zeigt die erfindungsgemäße Siegelvorrichtung 13, die aus einem Oberwerkzeug 60 und einem Unterwerkzeug 30 besteht. Die Siegelvorrichtung ist Teil einer Verpackungsmaschine. Zwischen dem Ober und dem Unterwerkzeug sind die Oberfolie 14 (nicht dargestellt) sowie die schrumpffähige Folienbahn 1 (nicht dargestellt), in die Verpackungsmulden 8 durch Tiefziehen eingearbeitet worden sind, angeordnet. Die Oberfolie 14 ist in dem vorliegenden Fall ebenfalls schrumpffähig. Die Folienbahn 1 wird durch zwei Ketten (nicht dargestellt) in einer Verpackungsmaschine (nicht dargestellt) fixiert und transportiert Die Oberfolie 14 wird an die Folienbahn 1 gesiegelt, um die Verpackungsmulden 8 zu verschließen. Die Oberfolie 14 ist nicht durch Ketten oder dergleichen fixiert und wird bekanntermaßen durch ihre Verbindung mit der Unterfolie 1 transportiert. Wie durch den Doppelpfeil dargestellt, ist das Oberwerkzeug vertikal verschiebbar. An dem Oberwerkzeug ist der beheizte Siegelrahmen 40 angeordnet, der beim Siegeln gegen die Siegelbrille 50 gedrückt wird. Dadurch werden die Folienbahnen 1, 14 gegeneinander gepresst. Durch den dabei entstehenden Druck und die erhöhte Temperatur erfolgt die Siegelung der Oberfolie an den Rand der Verpackungsmulden 8. Im Bereich jeder Verpackungsmulde ist am Oberwerkzeug eine Kühlplatte 20 angeordnet, die ein Aufwärmen der Oberfolie außerhalb der Siegelung verhindert. Diese Ausführungsform ist insbesondere bei schrumpffähigen Oberfollen von Interesse. Die Kühlplatten 20 sind ebenfalls vertikal verschiebbar. Das Unterwerkzeug ist auch, wie durch den Doppelpfeil angedeutet vertikal veschiebbar. Auch das Unterwerkzeug ist in dem vorliegenden Fall gekühlt, um ein ungewolltes Schrumpfen der Verpackungsmulde beim Siegeln zu verhindern. Für den Fall, dass die Oberfolie nicht schrumpffähig ist, kann in der Regel auf die Kühlplatte 20 und eine Kühlung des Oberwerkzeugs 60 verzichtet werden.

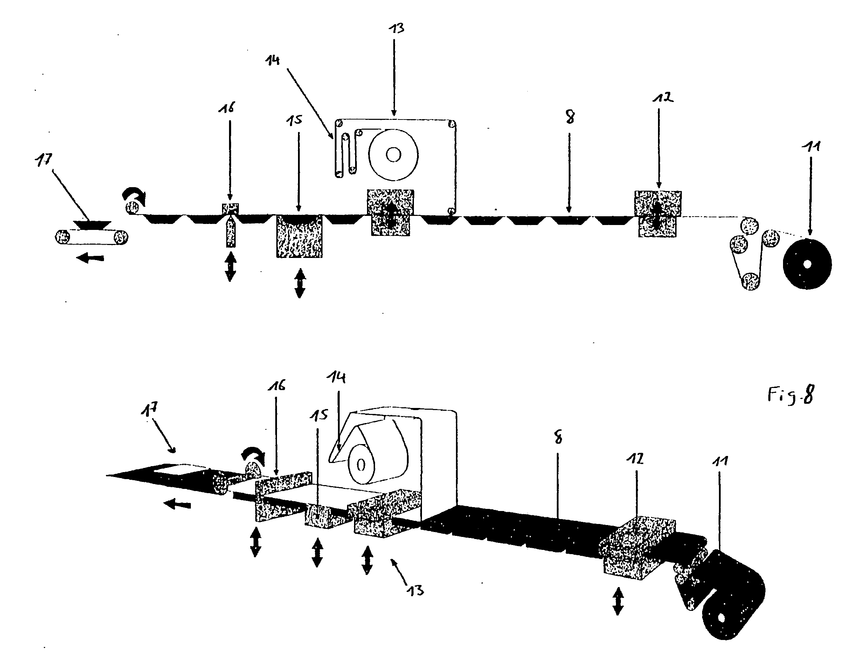

**Figur 8** zeigt eine Verpackungsmaschinen zur Herstellung einer shrinkplate, d.h. einer Verpackung mit einer schrumpffähigen Verpackungsmulde, die mit einer nicht schrumpffähigen vergleichsweise starren Deckelfolie verschlossen ist. Von einer Rolle 11 wird taktweise eine Folienbahn abgerollt und in der Tiefziehvorrichtung 12 werden Verpackungsmulden 8 in die Folienbahn eingeformt. Diese Verpackungsmulden 8 werden dann mit einem nicht dargestellten Verpackungsgut gefüllt und danach in der Siegelstation 13 mit einer Deckelfolie 14 verschlossen. In dem vorliegenden Fall besteht die Folienbahn 11 aus einer schrumpffähigen Folie während die Folienbahn 14 nicht schrumpffähig und relativ starr ist, so dass sie wie eine Tablett wirkt. Nach dem Siegeln wird die Verpackungsmulde in einer Schrumpfvorrichtung 15 geschrumpft, wobei nur die tiefgezogene Verpackungsmulde mit einem heißen Medium, beispielsweise heiße Luft, Dampf oder Wasser in Berührung kommt. Die so fertiggestellten geschrumpften Verpackungen werden so dann mit der Scheidvorrichtung 16 vereinzelt und als fertiggestellte Verpackung 17 abtransportiert. Die jeweiligen Doppelpfeile zeigen, dass ein oder zwei Aggregate der jeweiligen Station anhebbar bzw. absenkbar sind.

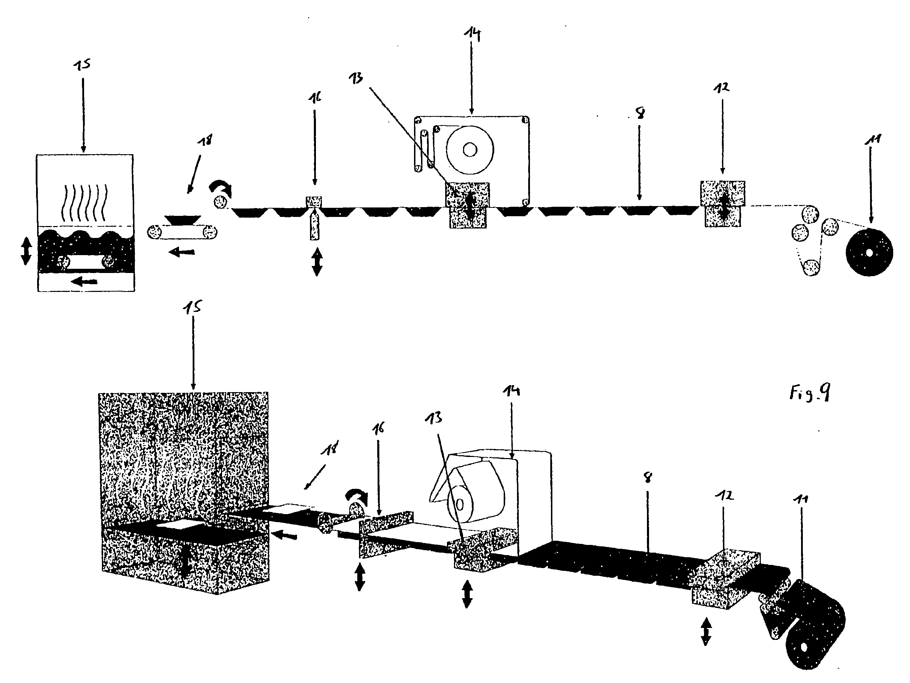

**Figur 9** zeigt eine Verpackungsmaschine zur Herstellung einer shrinkpack in zwei Ansichten. Ein shrinkpack besteht aus einer schrumpffähigen Ober- und einer schrumpffähigen Unterfolie. Wiederum wird von einer Rolle 11 die schrumpffähigen Folienbahn abgerollt und in einer Formstation 12 die Verpackungsmulden 8 in die Folienbahn durch Tiefziehen eingeformt. Nachdem die Verpackungsmulden mit einem nicht dargestellten Verpackungsgut befüllt worden sind, wird die Verpackungsmulde mit einer Folienbahn 14 in der Siegelstation 13 durch Siegeln verschlossen. In dem vorliegenden Fall handelt es sich bei der Deckelfolie ebenfalls um eine schrumpffähige Folie. In einem nächsten Verfahrensschritt werden die Verpackungen in einer Schneidstation 16 vereinzelt. Die so hergestellten Verpackungen 18 werden in einen Schrumpftunnel geschrumpft, in dem sie von allen Seiten mit kochendem Wasser beaufschlagt werden. Die jeweiligen Doppelpfeile zeigen, dass ein oder zwei Aggregate der jeweiligen Station anhebbar bzw. absenkbar sind.

### Bezugszeichen

- 1: Folienbahn
- 2: Kühlmittel, Kühlplatte
- 3: Unterwerkzeug, Tiefziehwerkzeug
- 4: Siegelrahmen, Haltemittel, Klemmmittel
- 5: Siegelbrille, kühlmittel
- 6: Oberwerkzeug, Boden der Verpackungsmulde, Doppelpfeil
- 7: Heizmittel, Heizplatten, Heizelemnt, Heizpatrone
- 8: Verpackungsmulde
- 9: Packungsränder
- 10: Packungsboden
- 11: Folienrolle
- 12: Tiefziehstation
- 13: Siegelstation, Siegelvorrichtung
- 14: Oberfolie
- 15: Schrumpfstation, Schrumpftunnel
- 16: Schneidstation
- 17: Fertiggestellte, geschrumpfte Verpackung
- 18: Verpackung vor dem Schrumpfen
- 19: Oberwerkzeug

## Patentansprüche

1. Verpackungsmaschine zur Herstellung einer Verpackung mit einem Tiefziehwerkzeug (3) zur Herstellung von tiefgezogenen Verpackungsmulden aus einer schrumpffähigen Folienbahn sowie mit einer Siegelvorrichtung mit einem Unterwerkzeug (30) und einem Oberwerkzeug (60), zur Siegelung einer schrumpffähigen Oberfolie an die Verpackungsmulden, **dadurch gekennzeichnet, dass** das Tiefziehwerkzeug (3) beim Tiefziehen und das Unterwerkzeug (30) und/oder das Oberwerkzeug (60) beim Siegeln gekühlt sind.

2. Verpackungsmaschine nach Anspruch 1, **dadurch gekennzeichnet, dass** das Unterwerkzeug (30) ein Kühlmittel aufweist.

3. Verpackungsmaschine nach einem der voranstehenden Ansprüche, **dadurch gekennzeichnet, dass** das Unterwerkzeug (30) vertikal verschiebbar ist.

4. Verpackungsmaschine nach einem der voranstehenden Ansprüche, **dadurch gekennzeichnet, dass** es Siegelmittel (40) aufweist, die beheizbar sind.

5. Verpackungsmaschine nach einem der voranstehenden Ansprüche, **dadurch gekennzeichnet, dass** das Oberwerkzeug (60) eine Kühlplatte (20) aufweist.

6. Verpackungsmaschine nach Anspruch 5, **dadurch gekennzeichnet, dass** das Oberwerkzeug eine Kühlplatte (20) pro herzustellender Verpackung (17, 18) aufweist.

7. Verpackungsmaschine nach einem der voranstehenden Ansprüche, **dadurch gekennzeichnet, dass** das Oberwerkzeug (60) und/oder die Kühlplatten (20) vertikal verschiebbar angeordnet ist(sind).

8. Verpackungsmaschine nach einem der voranstehenden Ansprüche, **dadurch gekennzeichnet, dass** es eine Siegelbrille (50) aufweist, die vorzugsweise an dem Unterwerkzeug (30) angeordnet ist.

9. Verpackungsmaschine nach Anspruch 8, **dadurch gekennzeichnet, dass** die Siegelbrille (50) gekühlt ist.

10. Verpackungsmaschine nach Anspruch 8 oder 9, **dadurch gekennzeichnet, dass** die Siegelbrille (50) anheb- und absenkbar ist.

11. Verpackungsmaschine nach einem der Ansprüche 8-10, **dadurch gekennzeichnet, dass** die Siegelbrille (50) eine Gummigegenlage aufweist.

12. Verpackungsmaschine nach einem der voranstehenden Ansprüche, **dadurch gekennzeichnet, dass** das Tiefziehwerkzeug (3) Kühlmittel (2) aufweist.

13. Verpackungsmaschine nach einem der voranstehenden Ansprüche, **dadurch gekennzeichnet, dass** die Folienbahn (1) zwischen einem Haltemittel (4) und dem Tiefziehwerkzeug (3) einspannbar ist.

14. Verpackungsmaschine nach Anspruch 13, **dadurch gekennzeichnet, dass** Haltemittel (4) mit Kühlmitteln (5) kühlbar ist.

15. Verpackungsmaschine nach Anspruch 13 oder 14, **dadurch gekennzeichnet, dass** das Haltemittel (4) vertikal verschiebbar angeordnet ist.

16. Verpackungsmaschine nach einem der voranstehenden Ansprüche, **dadurch gekennzeichnet, dass** das Tiefziehwerkzeug ein Heizmittel (7), vorzugsweise eine Heizplatte, aufweist, mit der die Folienbahn aufheizbar ist

17. Verpackungsmaschine nach Anspruch 16, **dadurch gekennzeichnet, dass** die Heizplatte (7) als Tiefziehstempel ausgeführt ist.

18. Verpackungsmaschine nach einem der voranstehenden Ansprüche, **dadurch gekennzeichnet, dass** das Tiefziehwerkzeug Vakuum- und/oder Druckmittel zum Tiefziehen der Folienbahn aufweist.

19. Verpackungsmaschine nach einem der voranstehenden Ansprüche, **dadurch gekennzeichnet, dass** das Tiefziehwerkzeug das Vakuum- und/oder Druckmittel aufweist um den Kontakt zwischen der Foliebahn und dem Heizmittel (7) zu verbessern.

20. Verfahren zur Herstellung einer Verpackung durch Siegeln einer Oberfolie (14) auf eine Verpackungsmulde, wobei mindestens die Verpackungsmulde (8) aus einer schrumpffähigen Kunststofffolie (1) hergestellt wird und die Verpackungsmulde (8) einen Siegelbereich aufweist, **dadurch gekennzeichnet, dass** die Folienbahn (1) erst teilweise aufgeheizt und der Siegelbereich vom und beim Tiefziehen teilweise gekühlt wird und dass beim Siegeln der Oberfolie (14) auf die Verpackungsmulde (8) die Oberfolie (14) und/oder die Verpackungsmulde (8) gekühlt wird.

21. Verfahren nach Anspruch 20, **dadurch gekennzeichnet, dass** der Wärmeeintrag für die Siegelung in einem Oberwerkzeug (60) erfolgt.

22. Verfahren nach einem der voranstehenden Ansprüche, **dadurch gekennzeichnet, dass** die schrumpffähige Kunststofffolie vorzugsweise von Siegelwerkzeugen (60, 30) fixiert wird.

23. Verfahren nach einem der voranstehenden Ansprüche, **dadurch gekennzeichnet, dass** die schrumpffähigen Kunststofffolie von Transportketten fixiert wird

24. Verfahren nach einem der voranstehenden Ansprüche, **dadurch gekennzeichnet, dass** die Verpackung nach dem Siegeln geschrumpft wird.

25. Verfahren nach einem der voranstehenden Ansprüche, **dadurch gekennzeichnet, dass** die Folienbahn (1) vor dem Tiefziehen eingespannt wird.

26. Verfahren nach einem der voranstehenden Ansprüche, **dadurch gekennzeichnet, dass** die Folienbahn (1) durch Über- und/oder Unterdruck verformt wird.

27. Verfahren nach einem der voranstehenden Ansprüche, **dadurch gekennzeichnet, dass** das jeder Verpackungsmulde (8) ein Heizmittel (7) zugeordnet wird.

28. Verfahren nach einem der voranstehenden Ansprüche, **dadurch gekennzeichnet, dass** die tiefgezogene Folie (1) so lange gekühlt wird, bis eine Rückverformung unterbleibt.

## Claims

1. Packaging machine for producing a package with a thermoforming mould (3) for producing thermoformed packaging trays from a shrinkable film web and with a sealing device with a lower mould (30) and an upper mould (60) for the sealing of a shrinkable upper film onto the packaging trays, **characterized in that** the thermoforming mould (3) is cooled during the thermoforming and the lower mould (30) and/or the upper mould (60) are cooled during the sealing.

2. Packaging machine according to Claim 1, **characterized in that** the lower mould (30) has a cooling means.

3. Packaging machine according to one of the preceding claims, **characterized in that** the lower mould (30) is vertically displaceable.

4. Packaging machine according to one of the preceding claims, **characterized in that** it has sealing means (40), which are heatable.

5. Packaging machine according to one of the preceding claims, **characterized in that** the upper mould (60) has a cooling plate (20).

6. Packaging machine according to Claim 5, **characterized in that** the upper mould has a cooling plate (20) for each package (17, 18) to be produced.

7. Packaging machine according to one of the preceding claims, **characterized in that** the upper mould (60) and/or the cooling plates (20) is (are) arranged such that they are vertically displaceable.

8. Packaging machine according to one of the preceding claims, **characterized in that** it has a yoke sealing plate system (50), which is preferably arranged on the lower mould (30).

9. Packaging machine according to Claim 8, **characterized in that** the yoke sealing plate system (50) is cooled.

10. Packaging machine according to Claim 8 or 9, **characterized in that** the yoke sealing plate system (50) can be raised and lowered.

11. Packaging machine according to one of Claims 8 - 10, **characterized in that** the yoke plate sealing system (50) has a rubber abutment.

12. Packaging machine according to one of the preceding claims, **characterized in that** the thermoforming mould (3) has cooling means (2).

13. Packaging machine according to one of the preceding claims, **characterized in that** the film web (1) can be clamped between a holding means (4) and the thermoforming mould (3).

14. Packaging machine according to Claim 13, **characterized in that** the holding means (4) can be cooled by cooling means (5).

15. Packaging machine according to Claim 13 or 14, **characterized in that** the holding means (4) is arranged such that it is vertically displaceable.

16. Packaging machine according to one of the preceding claims, **characterized in that** the thermoforming mould has a heating means (7), preferably a heating plate, with which the film web can be heated up.

17. Packaging machine according to Claim 16, **characterized in that** the heating plate (7) is configured as a thermoforming die.

18. Packaging machine according to one of the preceding claims, **characterized in that** the thermoforming mould has vacuum and/or pressure means for thermoforming the film web.

19. Packaging machine according to one of the preceding claims, **characterized in that** the thermoforming mould has the vacuum and/or pressure means to improve the contact between the film web and the heating means (7).

20. Method for producing a package by sealing an upper film (14) onto a packaging tray, at least the packaging tray (8) being produced from a shrinkable plastic film (1) and the packaging tray (8) having a sealing region, **characterized in that** the film web (1) is first partially heated up and the sealing region is partially cooled before and during the thermoforming and **in that** the upper film (14) and/or the packaging tray (8) is/are cooled during the sealing of the upper film (14) onto the packaging tray (8).

21. Method according to Claim 20, **characterized in that** the introduction of heat for the sealing is performed in an upper mould (60).

22. Method according to one of the preceding claims, **characterized in that** the shrinkable plastic film is preferably fixed by sealing moulds (60, 30).

23. Method according to one of the preceding claims, **characterized in that** the shrinkable plastic film is fixed by transporting chains.

24. Method according to one of the preceding claims, **characterized in that** the package is shrunk after the sealing.

25. Method according to one of the preceding claims, **characterized in that** the film web (1) is clamped before the thermoforming.

26. Method according to one of the preceding claims, **characterized in that** the film web (1) is deformed by positive and/or negative pressure.

27. Method according to one of the preceding claims, **characterized in that** each packaging tray (8) is assigned a heating means (7).

28. Method according to one of the preceding claims, **characterized in that** the thermoformed film (1) is cooled until there is no recovery.

## Revendications

1. Machine d'emballage destinée à réaliser un emballage à l'aide d'un outil d'emboutissage (3) destiné à fabriquer des barquettes d'emballage embouties à partir d'une nappe de feuille rétractable ainsi qu'à l'aide d'un dispositif de scellement doté d'un outil inférieur (30) et d'un outil supérieur (60) et qui scelle une feuille supérieure rétractable sur la barquette d'emballage,
**caractérisée en ce que**
l'outil d'emboutissage (3) est refroidi lors de l'emboutissage et **en ce que** l'outil inférieur (30) et/ou l'outil supérieur (60) sont refroidis lors du scellement.

2. Machine d'emballage selon la revendication 1, **caractérisée en ce que** l'outil inférieur (30) présente un moyen de refroidissement.

3. Machine d'emballage selon l'une des revendications précédentes, **caractérisée en ce que** l'outil inférieur (30) peut coulisser verticalement.

4. Machine d'emballage selon l'une des revendications précédentes, **caractérisée en ce qu'**elle présente des moyens de scellement (40) qui peuvent être chauffés.

5. Machine d'emballage selon l'une des revendications précédentes, **caractérisée en ce que** l'outil supérieur (60) présente une plaque de refroidissement (20).

6. Machine d'emballage selon la revendication 5, **caractérisée en ce que** l'outil supérieur présente une plage de refroidissement (20) pour chaque emballage (17, 18) à réaliser.

7. Machine d'emballage selon l'une des revendications précédentes, **caractérisée en ce que** l'outil supérieur (60) et/ou les plaques de refroidissement (20) sont disposés de manière à pouvoir coulisser verticalement.

8. Machine d'emballage selon l'une des revendications précédentes, **caractérisée en ce qu'**elle présente une lunette de scellement (50) disposée de préférence sur l'outil inférieur (30).

9. Machine d'emballage selon la revendication 8, **caractérisée en ce que** la lunette de scellement (50) est refroidie.

10. Machine d'emballage selon les revendications 8 ou 9, **caractérisée en ce que** la lunette de scellement (50) peut être relevée et abaissée.

11. Machine d'emballage selon l'une des revendications 8 à 10, **caractérisée en ce que** la lunette de scellement (50) présente un contre-appui en caoutchouc.

12. Machine d'emballage selon l'une des revendications précédentes, **caractérisée en ce que** l'outil d'emboutissage (3) présente des moyens de refroidissement (2).

13. Machine d'emballage selon l'une des revendications précédentes, **caractérisée en ce que** la nappe de feuille (1) peut être tendue entre un moyen de maintien (4) et l'outil d'emboutissage (3).

14. Machine d'emballage selon la revendication 13, **caractérisé en ce que** le moyen de maintien (4) peut être refroidi à l'aide de moyens de refroidissement (5).

15. Machine d'emballage selon les revendications 13 ou 14, **caractérisée en ce que** le moyen de maintien (4) est disposé de manière à pouvoir coulisser verticalement.

16. Machine d'emballage selon l'une des revendications précédentes, **caractérisée en ce que** l'outil d'emboutissage présente un moyen de chauffage (7), de préférence une plaque chauffante, par lequel la nappe de feuille peut être chauffée.

17. Machine d'emballage selon la revendication 16, **caractérisée en ce que** la plaque chauffante (7) est configurée comme poinçon d'emboutissage.

18. Machine d'emballage selon l'une des revendications précédentes, **caractérisée en ce que** l'outil d'emboutissage présente des moyens d'aspiration et/ou de compression pour l'emboutissage de la nappe de feuille.

19. Machine d'emballage selon l'une des revendications précédentes, **caractérisée en ce que** les moyens d'aspiration et/ou de compression de l'outil d'emboutissage sont prévus pour améliorer le contact entre la nappe de feuille et le moyen de chauffage (7).

20. Procédé de fabrication d'un emballage par scellement d'une feuille supérieure (14) sur une barquette d'emballage, au moins la barquette d'emballage (8) étant réalisée en une feuille (1) de matière synthétique rétractable et la barquette d'emballage (8) présentant une zone de scellement,
**caractérisé en ce que**
la nappe de feuille (1) est d'abord partiellement chauffée et la zone de scellement est partiellement refroidie avant et/ou pendant l'emboutissage et
**en ce que** la feuille supérieure (14) et/ou la barquette d'emballage (8) sont refroidies lors du scellement de la feuille supérieure (14) sur la barquette d'emballage (8).

21. Procédé selon la revendication 20, **caractérisé en ce que** la chaleur nécessaire pour le scellement est apportée dans un outil supérieur (60).

22. Procédé selon l'une des revendications précédentes, **caractérisé en ce que** la feuille de matière synthétique rétractable est fixée de préférence par des outils de scellement (60, 30).

23. Procédé selon l'une des revendications précédentes, **caractérisé en ce que** la feuille de matière synthétique rétractable est fixée par des chaînes de transport.

24. Procédé selon l'une des revendications précédentes, **caractérisé en ce que** l'emballage est rétracté après le scellement.

25. Procédé selon l'une des revendications précédentes, **caractérisé en ce que** la nappe de feuille (1) est tendue avant l'emboutissage.

26. Procédé selon l'une des revendications précédentes, **caractérisé en ce que** la nappe de feuille (1) est déformée par surpression et/ou dépression.

27. Procédé selon l'une des revendications précédentes, **caractérisé en ce qu'**un moyen de chauffage (7) est associé à chaque barquette d'emballage (8).

28. Procédé selon l'une des revendications précédentes, **caractérisé en ce que** la feuille (1) emboutie est refroidie jusqu'à ne plus présenter de déformation par retrait.
